# EUROPEAN PATENT SPECIFICATION

(11) **EP 2 899 123 B1**
(45) Date of publication and mention of the grant of the patent: **26.06.2019**
(21) Application number: 14152744.0
(22) Date of filing: 27.01.2014
(51) Int. Cl.: B64D 1/12

(54) **Tow plate and load extraction system**
Zugplatte und Lastextraktionssystem
Dispositif de transfert de forces et système d'extraction de charge

(43) Date of publication of application: 29.07.2015
(73) Proprietor: Airbus Defence and Space GmbH, 82024 Taufkirchen (DE)
(72) Inventor: Gad, Roland, 28199 Bremen (DE); Wyrembek, Jörg, 27755 Delmenhorst (DE); Jegminat, Svenja, 28205 Bremen (DE)
(74) Representative: Bird & Bird LLP

(56) References cited:
- WO-A2-2012/062837
- DE-A1-102008 056 783
- US-A- 4 303 213
- US-A- 4 398 686
- US-B1- 6 241 190

## Description

The present invention relates to a tow plate comprising a base plate, an actuating assembly and a retaining assembly. The actuating assembly and the retaining assembly are rigidly attached to the base plate. The actuating assembly comprises at least one locking element and at least one actuator for moving the at least one locking element between a retaining position and a releasing position. The actuating assembly and the retaining assembly are arranged for releasably holding a load transmission unit attached to the tow plate when the at least one locking element is in the retaining position. A load transmission unit held by the actuating assembly and the retaining assembly can be detached from the tow plate when the at least one locking element has been moved to the releasing position by the at least one actuator. The invention further relates to a load extraction system and a method for releasing a load transmission unit.

Aerial delivery of cargo units, i.e. dropping of cargo from a flying aircraft, by means of parachutes is one way of providing supply in areas that are cut-off from ground supply and lack landing areas for aircraft. Contrary to what is implied by the term "drop", cargo units have to be pulled out of the aircraft, i.e. extracted from the aircraft, with the correct extraction velocity to ensure that the cargo units will leave the cargo bay of the aircraft in a defined manner. To generate a sufficiently high extraction velocity, cargo units are pulled out of the cargo bay of the aircraft by an extraction parachute.

The extraction parachute is connected to the cargo unit via a so-called tow plate as known, inter alia, from U.S. 3,801,051. The particular tow plate disclosed therein is primarily used for connecting a so-called drogue parachute to an extraction parachute. The drogue parachute is a smaller parachute that is commonly used to extract the extraction parachute from the cargo bay of the aircraft. However, it may also be used to extract lightweight cargo units from the cargo bay.

The tow plate comprises a base plate, a retaining assembly and a mechanical actuating assembly. Both the retaining assembly and the actuating assembly are rigidly attached to the base plate. The actuating assembly and the retaining assembly releasably hold a load transmission unit in form of a clevis assembly. Both the drogue parachute and the extraction parachute that is to be extracted are connected to the clevis assembly by lines. When the extraction parachute shall be pulled from the aircraft, first the drogue parachute is to be released via a tow plate that is only designed for drogue parachutes. An operator than has to wait until the drogue parachute has been sufficiently filled with air, creates a sufficiently high extraction force and the drop zone where the extractable unit shall be delivered has been reached. If the operator is of the opinion that all release conditions for the extractable unit are fulfilled, he manually actuates the actuation assembly and releases the load transmission unit from the tow plate where the drogue parachute is attached. Now the extraction parachute will be pulled out of the aircraft by the drogue parachute. A similar tow plate system can be used to connect the extraction parachute to extractable units in form of cargo units and to ensure that the extraction parachute generates a sufficiently high extraction force to securely extract the cargo units.

DE 10 2008 056 783 A1 discloses a load extraction system for retaining an extractable unit in a cargo bay of an aircraft. The system comprises a retaining assembly for retaining the extractable unit. A load acting on the extractable unit by an extraction parachute is measured and the load is only by the retaining assembly if the load exceeds a predetermined value.

In U.S. 6,241,190 B1 an electro-mechanically operating tow plate is disclosed.

Former tow plate designs applied for the usage of drogue parachutes only, are, however, disadvantageous as they rely completely on the experience of the operator of the tow plate to operate. Thus, there appears to be a need for an improved tow plate to ensure that the actuating assembly is only actuated and the load transmission unit is only released when a sufficiently high extraction force is generated.

In a first aspect the object underlying the present invention is solved by a tow plate comprising at least one load sensor adapted for measuring a load acting on a load transmission unit by an extraction unit while the load transmission unit is releasably held by the actuating assembly and the retaining assembly. The tow plate further comprises a central data processing unit connected to the at least one load sensor and the at least one actuator, wherein the central data processing unit is adapted to only instruct the at least one actuator to move the at least one locking element from the retaining position to the releasing position when the load measured by the load sensor exceeds a predetermined value.

The tow plate according to the present invention comprises a base plate, an actuating assembly and a retaining assembly. The base plate can be rigidly coupled to an aircraft, e.g. the floor of the cargo bay of a cargo or transport aircraft. Both the actuating assembly and the retaining assembly are rigidly attached or mounted to the base plate and can, thus, be rigidly coupled through the base plate to an aircraft structure.

The actuating assembly and the retaining assembly cooperate to form a releasable holding assembly for a load transmission unit. To this end the actuating assembly comprises a locking element that can be moved between a locking position and a releasing position. If the locking element is in the locking position, a load transmission unit held by the retaining assembly and the actuating assembly is rigidly attached to the base plate and, thus, rigidly coupled to an aircraft through the tow plate. The actuating assembly and the retaining assembly are designed, i.e. are sufficiently rigid, to capture any loads regularly acting on the load transmission unit and retain the load transmission unit in place. Hence, any loads acting on the load transmission unit by an extraction element are not transferred to an extractable unit attached to the load transmission unit but are completely absorbed by the tow plate. For example, the actuating assembly and the retaining assembly are dimensioned to retain the load transmission unit even if an extraction unit in form of a fully inflated drogue or extraction parachute pulled by an aircraft at a cargo drop-off velocity is directly attached to the load transmission unit.

For removing or releasing a load transmission unit from the tow plate, the locking element can be moved to a releasing or non-locking position. To this end the locking assembly comprises at least one actuator adapted to move the locking element between the locking position and the releasing position. In a preferred exemplary embodiment the actuator is an electrical actuator. However, the actuator may be of any other form of actuator such as a hydraulic actuator as long as its operation can be controlled by a central data processing unit. Once the locking element has been moved to the releasing position, a load transmission unit previously held by the retaining assembly can be moved away from the tow plate. If, for example, a fully inflated drogue parachute as extraction unit is attached to the load transmission unit and the locking element is moved to the releasing position, the drogue parachute pulls the load transmission unit away from the tow plate and any extractable unit, e.g. an extraction parachute or a cargo unit, out of the cargo bay of the aircraft.

The retaining assembly further comprises at least one load sensor adapted for measuring a load acting or impeding on a load transmission unit by an extraction unit. In other words, the load sensor is adapted to measure the load that an extraction unit such as a drogue parachute or an extraction parachute connected to the load transmission unit creates when released in the airstream around the aircraft. This load can also be referred to as an extraction force.

The load measured by the load sensor is transferred to a central data processing unit connected both to the load sensor and the actuator. To this end the central data processing unit is equipped with the necessary connectors. Further, the central data processing unit is adapted to compare the load measured or determined by the load sensor with a pre-set or predefined or predetermined load value. Adapting a data processing unit may be conducted by installing software on the data processing unit or by providing hardware means enabling the data processing unit to perform all stipulated actions. If the measured load reaches or exceeds the predefined load value, the central data processing unit is adapted to instruct the actuating assembly, and to be more precise the actuator, to move the locking element from the locking position to the releasing position so that a load transmission unit can be detached from the tow plate.

The central data processing unit may be an integrated circuit locally installed in the tow plate itself, e.g. in the housing of the actuating assembly. However, in an exemplary preferred embodiment the central data processing unit is part of the aircraft's load management system. Thus, apart from comparing the measured load to a predetermined load the central data processing unit may also provide a recording function storing any measured values. Additionally, the central data processing unit may also be adapted to include further restrictions in the process of instructing the actuating assembly to release the load transmission unit. For example, the central data processing unit may be connected to the aircraft's navigation system and be adapted to only release the load transmission unit if the load exceeds a predetermined value and a predetermined geographic position, i.e. the drop zone, has been reached.

Hence, the present invention advantageously allows determining precisely when a sufficiently high extraction force is generated, i.e. when a sufficiently high load is measured by the load sensor, to safely drop an extractable unit from an aircraft. The necessary extraction force can be determined, for example, as a function of the weight of the extractable unit and the employed drop-off mode. Thus, the determination if a sufficiently high extraction force is generated does not further rely on operator experience which reduces the risk of damage of the released cargo and/or aircraft.

In a preferred embodiment the retaining assembly comprises two load sensors adapted for measuring a load acting on a load transmission unit by an extraction unit through an extraction line connected to the load transmission unit while the load transmission unit is releasably held by the actuating assembly and the retaining assembly. The central data processing unit is connected to both load sensors. The central data processing unit is adapted to instruct the at least one actuator to move the at least one locking element from the retaining position to the releasing position only when the load acting on the load transmission unit by the extraction unit measured by each of the two load sensors exceeds a predetermined value.

Thus, in the preferred embodiment the locking element of the tow plate is only moved to the releasing position if both load sensors measure a sufficiently high extraction force. Hence, a robust measurement of the load is provided that prevents accidental release of the tow plate if the load generated by the extraction device is not sufficiently high.

In a further preferred embodiment the actuating assembly comprises two actuators for moving the at least one locking element between the retaining position and the releasing position, wherein both actuators are connected to the central data processing unit and the central data processing unit is adapted to instruct both actuators to move the locking element from the retaining to the locking position. Thus, in the preferred embodiment a redundant and less error-prone actuating assembly is provided. Even if one of the actuators fails, a second actuator is provided for releasing the load transmission unit upon instruction by the central data processing unit.

In a preferred embodiment each load sensor is connected to the central data processing unit via a separate local data processing unit. Each local data processing unit is adapted to determine a load acting on a load transmission unit by an extraction unit from a signal of the respective load sensor connected to the local data processing unit and to transmit the determined load to the central data processing unit. Providing local data processing units - one for each load sensor - further increases the mission reliability of the tow plate operation compared to a tow plate relying only on a single central data processing unit. The load measured by each sensor is determined by an independent local data processing unit separate from the local data processing units that determine the load of other load sensors. Thus, even if one of the local data processing units should malfunction and erroneously determine a higher load that already exceeds the predetermined load though the actually generated load has not reached the predetermined value, the second local data processing unit still determines the correct lower load from the other load sensor and the load transmission unit will not be released too early. The local data processing units may also be integrated circuits that are integrated into the tow plate itself but can also be other kinds of data processing units arranged spaced apart from the tow plate.

In a second aspect the problem is solved by a load extraction system for retaining an extractable unit in a cargo bay of an aerospace vehicle and releasing the extractable unit from the cargo bay. The system comprises a tow plate according to any of the preceding embodiments and an extractable unit retaining assembly. The extractable unit retaining assembly comprises holding means for releasably retaining an extractable unit. The holding means can be moved between a holding position in which an extractable unit can be held by the holding means attached to the extractable unit retaining assembly and a releasing position in which an extractable unit can be detached from the extractable unit retaining assembly. The central data processing unit is adapted to instruct the extractable unit retaining assembly to move the holding means from the holding position to the releasing position after moving the at least one locking element from the retaining position to the releasing position.

The load extraction system according to the present invention comprises apart from an embodiment of a tow plate according to the present invention also an extractable unit retaining assembly. The extractable unit retaining assembly is used to hold an extractable unit, such as a unit load device, in place during flight until it is dropped. To this end the extractable unit retaining assembly comprises a plurality of holding means that can be moved between a releasing and a retaining position. In the retaining position an extractable unit held by the extractable unit retaining system cannot move away from position. Thus, the retaining system prevents any unintended movement of the extractable unit during flight, e.g. due to flight manoeuvres, that could put the aircraft personal or even the aircraft itself in danger. If the holding means are, however, moved to the releasing position, the extractable units can be moved and, in particular, pulled out of the aircraft by an extraction parachute. To ensure that the holding means is moved to the releasing position in due time once a load transfer unit connected to an extractable unit held by the extractable unit retaining assembly has been released, the latter is also connected to the central data processing unit.

The central data processing unit is adapted to instruct the extractable unit retaining assembly to move the holding means from the retaining to the releasing position after having instructed the actuators of the retaining assembly to move the at least one locking element from the retaining to the releasing position. In an exemplary preferred embodiment the central data processing unit is adapted to continuously monitor the loads measured by the load sensors after the at least one locking element has been moved to the releasing position. As soon as the measured load drops to zero, the central data processing unit instructs the extractable unit retaining assembly to release the extractable unit.

Thus, the load extraction system according to the present invention provides additional safety by releasing extractable units not before the load transmission unit has been released and the extraction parachute may readily begin to pull the extractable unit out of the cargo bay of the aircraft. Thereby, any risk of unintended and undirected movement of the extractable units is further reduced.

In a preferred embodiment the load extraction system further comprises a load transmission unit, an extractable unit and an extraction unit. The extractable unit is adapted to be held by the extractable unit retaining assembly and connected to the load transmission unit by a device line and the extraction unit is connected to the load transmission unit by an extraction line. The load transmission unit is adapted to be releasably held by the actuating assembly and the retaining assembly of the tow plate. Preferably the extraction unit is a drogue parachute, an extraction parachute or a cargo unit. Further, it is preferred that the extractable unit is an extraction parachute or a cargo unit.

The preferred embodiments of the load extraction system share the advantages of the embodiments of the tow plate according to the present invention employed therein.

In a further aspect the object is solved by a method for releasing a load transmission unit held between at least one locking element of an actuating assembly in a retaining position and a retaining assembly. The actuating assembly and the retaining assembly are part of a tow plate. The method comprises the steps of measuring a load acting on the load transmission unit by an extraction unit, comparing the measured load with a predetermined value and moving the at least one locking element from the retaining position to a releasing position when the predetermined value is exceeded, wherein the load transmission unit can be detached from the tow plate when the locking element is in the releasing position.

In a preferred embodiment the step of measuring the load acting on the load transmission unit comprises performing two independent measurements of the load acting on the load transmission unit with separate load sensors. Further, comparing the measured load with a predetermined value comprises comparing the measured loads of both independent measurements to the predetermined value, wherein the at least one locking element is only moved to the releasing position when both measured loads exceed the predetermined value.

It is further preferred that the method comprises a step of moving a holding means of an extractable unit retaining assembly to a releasing position after moving the at least one locking element to the releasing position, such that an extractable unit held by the holding means in a holding position can be detached from the extractable unit retaining assembly.

The preferred embodiments of a method for releasing a load transmission unit share the advantages of those embodiments of the tow plate and the load extraction system according to the present invention comprising structural features that correspond to the respective functional features of the preferred embodiments of the method for releasing a load transmission unit.

The present invention will now be described in more detail with reference to the drawings depicting merely exemplary embodiments, wherein
- Fig. 1: is a top view of a schematic representation of an exemplary embodiment of a tow plate according to the present invention,
- Fig. 2: is a sectional side view of the schematic representation of the exemplary embodiment of a tow plate of Fig. 1,
- Fig. 3: is a schematic representation of an exemplary embodiment of a load extraction system according to the present invention in which a load transmission unit is held by the tow plate and
- Fig. 4: shows the exemplary embodiment of Fig. 3 with the load transmission unit having been released from the tow plate.

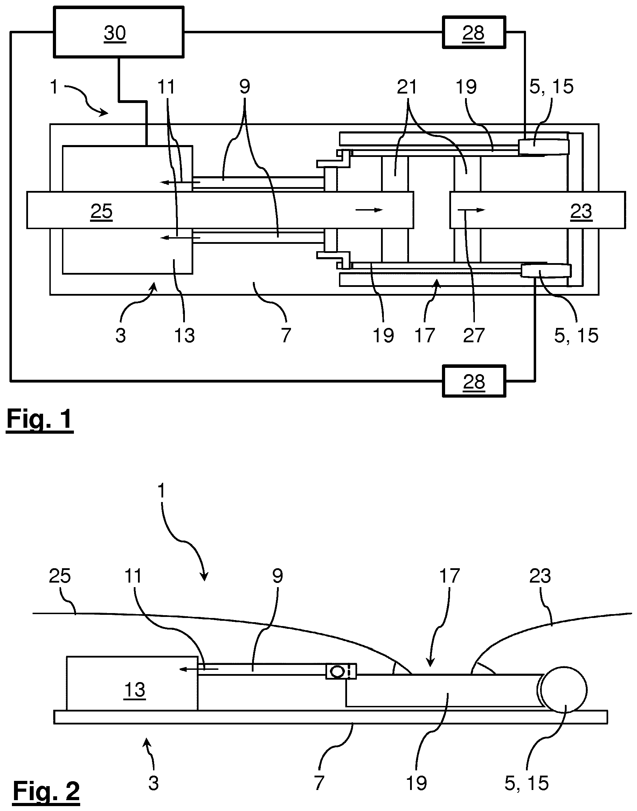

With reference to Figs. 1 and 2 of the drawings an exemplary embodiment of a tow plate 1 according to the present invention will now be described. The tow plate 1 comprises an actuating assembly 3 and a retaining assembly 5 which are rigidly attached or mounted to a base plate 7 that forms part of the tow plate 1. The base plate 7 is adapted to be mounted to a floor of a cargo bay of a transport or cargo aircraft.

The actuating assembly 3 comprises two actuators which drive the same locking element 9 that can be moved between a locking or retaining position and a non-locking or releasing position in a direction indicated by arrows 11. The actuators are arranged in a housing 13 of the actuating assembly 3. The actuators are preferably electrical or hydraulic actuators. Advantageously each actuator can move the locking element 9 independently of the other actuator such that a redundant and, thus, less error prone operation of the locking element 9 can be achieved.

The retaining assembly 5 is formed by two cam followers 15 rotatably connected to the base plate 7. Between the retaining assembly 5, i.e. the cam followers 15, and the locking element 9 of the actuating assembly 3 a load transmission unit 17 in form of a clevis assembly 17 is releasably held or retained. The clevis assembly 17 comprises two parallel side bars 19 that are interconnected by two attachment bars 21 that extend in a direction perpendicular to the extension direction of the side bars 19. The clevis assembly 17 is in other words H-shaped with double cross bars. The attachment bars 21 can be used to connect the load transmission unit 17 to an extraction unit via an extraction line 23 and to an extractable unit via a device line 25. The side bars 19 can be used to transfer loads between the two attachment bars 21 and to retain the load transmission unit 17 or clevis assembly 17 attached to the tow plate 1.

In each of the cam followers 15 a load sensor has been installed that is arranged for measuring the load acting on the load transmission unit 17. These load sensors are adapted to measure or determine the load or force that is created by the extraction line 23 i.e. the force that pulls the load transmission unit 17 in the direction of the arrow 27. Each load sensor is connected to a separate local data processing unit 28. The local data processing units 28 may be part of the tow plate 1. However, they can also be arranged spaced apart from the tow plate 1. In the embodiments shown in the Figures the local data processing units 28 are formed as integrated circuits. Each local data processing unit 28 receives a signal from one load sensor corresponding to the measured load. From the received signal the local data processing unit 28 determines the load acting onto the load transmission unit 17. In other words, each local data processing unit 28 is adapted to convert the measured raw data into an engineering value. The determined value is than transmitted to a central data processing unit 30. By providing a separate local data processing unit 28 for each load sensor, mission reliability of the tow plate 1 operation is further increased. Even if one of the local data processing units 28 should fail and accidentally determine too high loads generated by the extraction unit, the second local data processing unit 28 still independently determines the correct load and the load transmission unit 17 will not be released too early.

The central data processing unit 30 may be installed inside the tow plate 1. However, in the present embodiment shown in Figs. 1 and 2 the central data processing unit 30 is part of the aircraft's cargo management system and provides additional functionality related to the retaining and releasing of extractable units from the aircraft's cargo bay. The central data processing unit 30 compares the measured value to a pre-set or predetermined value. The predetermined value can be varied to match the weight or the dimensions of the extractable unit that shall be released from the aircraft. If the predetermined value is reached or exceeded, the system or central data processing unit 30 instructs the actuators to which it is also connected to move the locking element 9 into the direction of the arrows 11 in the releasing position. The side bars 19 are now no longer held in position by the locking element 9 and may rotate about the cam followers 15. Thus, the load transmission unit 17 as a whole may move away from the tow plate 1 in the direction into which it is pulled by the extraction line 23. Thereby, the device line 25 is tightened and the load acting on the load transmission unit 17 that was previously transferred to the tow plate 1 is now fully acting through the load transmission unit 17 onto the device line 25 and via the device line 25 onto an extractable unit connected to the device line 25.

Hence, the tow plate 1 according to the present invention advantageously ensures that the load transmission unit 17 is only released when a sufficiently high extraction force acts on the load transmission unit 17 to ensure safe extraction of the extractable units. Contrary to prior art tow plates the determination if sufficient load is generated does not rely on operator experience only, whereby safety of the aircraft personal operating the tow plate and the extractable units itself are increased.

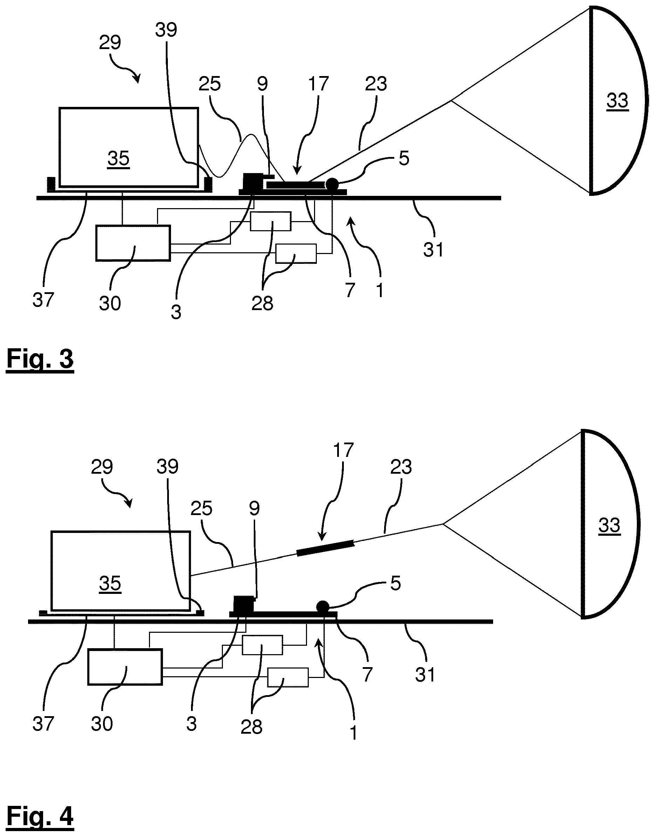

In Figs. 3 and 4 an exemplary embodiment of a load extraction system 29 according to the present invention is depicted. The load extraction system 29 comprises an embodiment of a tow plate 1 according to the present invention corresponding to the tow plate 1 of Figs. 1 and 2. Like numerals in the Figures indicate like elements. In the following only those features of the load extraction system 29 will be described here in further details that have not yet been described with reference to Figs. 1 or 2.

The base plate 7 of the tow plate 1 that forms part of the load extraction system 29 is rigidly attached to a floor 31 of the cargo bay of a transport aircraft. The tow plate 1 releasably holds or retains a load transmission unit 17 between the locking element 9 in the locking position and the retaining assembly 5. The load transmission unit is connected through the extraction line 23 to an extraction unit 33 in form of an extraction parachute 33 that has been released into the airstream around the aircraft. As long as the load transmission unit 17 is held by the tow plate 1, any force generated by the extraction parachute 33 acting through the extraction line 23 onto the load transmission unit 17 is transferred into the floor, i.e. the structure, of the transport aircraft. No force or load whatsoever is, however, transferred trough the device line 25 that is also connected to the load transmission unit 17 to the extractable unit 35 in form of a unit load device 35.

While the load transmission unit 17 is held by the tow plate 1, the load sensors that are part of the retaining assembly 5 constantly measure the load acting on the load transmission unit 17 and transfer the measured values through the local data processing units 28 to the central data processing unit 30. When the extraction parachute 33 is released into the airstream and begins to fill with air, the previously loose extraction line 23 begins to tighten. The load acting on the load transmission unit 17 that is measured by the load sensors begins to increase. A signal corresponding to the measured load is transferred to the local data processing units 28, which determine a numeric value for the measured loads and provide this value for further processing to the system or central data processing unit 30. Here, the measured values are compared to a predetermined value that depends, for example, on the type of the extractable unit 35, the weight of the extractable unit 35 and the extraction mode. Once the predetermined load value has been reached or exceeded, the central data processing unit 30 instructs the actuators of the actuating assembly 3 to move the locking element 9 to the releasing position. In Fig. 4 the locking element 9 is shown in a releasing or non-locking position.

As can be seen in Fig. 4, the load transmission unit 17 is then pulled of the tow plate 1 by the extraction parachute 33. The load or extraction force generated by the latter is now not transferred to the tow plate 1 anymore but pulls the device line 25 and begins to extract the unit load device 35 from the cargo bay of the cargo aircraft.

The load extraction system 29 according to the present invention further comprises an extractable unit retaining assembly 37. The extractable unit retaining assembly 37 is adapted to securely hold an extractable unit 35 or cargo unit 35 in place during the flight. In particular, the extractable unit retaining assembly 37 prevents any unintended movement of the cargo unit 35 that might put the aircraft personal or the aircraft itself at risk. To allow dropping the cargo off the aircraft the extractable unit retaining assembly 37 comprises holding means 39 that releasably hold the cargo units 35. The holding means 39 can be moved between a holding position depicted in Fig. 3 and a releasing position depicted in Fig. 4. In the holding position the extractable unit 35 is safely held in place. However, if the holding means 39 are moved to the releasing position, the extractable unit 35 can be pulled out of the aircraft by the extraction parachute 33.

For controlling the movement of the holding means 39 the extractable unit retaining assembly 37 is also connected to the central data processing unit 30. The central data processing unit 30 is adapted to instruct the extractable unit retaining assembly 37 to move the holding means 39 to the releasing position and, thus, release the extractable unit 35, after the load transmission unit 17 has been released. In particular, the central data processing unit 30 is adapted to continuously monitor the loads provided by the local data processing units 28 after the load transmission unit 17 has been released. Once the load transmission unit 17 has fully detached from the tow plate 1 and the measured loads drop to zero, the central data processing unit 30 instructs the extractable unit retaining assembly 37 to move the holding means 39 to the releasing position. By providing an extractable unit retaining system 37 and adapting the central data processing unit 30 in the described manner, the extractable unit 35 is only just released before the extraction parachute 33 begins to pull the extractable unit 35 out of the aircraft. Thus, any unintentional movement of the extractable unit 35 that might harm aircraft personal and damage other cargo or the aircraft itself is advantageously prevented.

The exemplary embodiment of a load extraction system 29 according to the present invention shares the advantages of the exemplary embodiment of a tow plate 1 according to the present invention depicted in Figs. 1 and 2. In particular, the correct time to release the load transmission unit 17 is determined by the load generated by the extraction unit 33 and does not depend on operator experience. Further, providing two load sensors 9 prevents accidental release of the load transmission unit 17 and, thus, the extractable unit 35 in case one of the load sensors malfunctions.

The exemplary embodiments of the tow plate 1 and the load extraction system 29 according to the present invention also resemble an exemplary embodiment of a method for releasing a load transmission unit 17 according to the present invention. In a first step of the exemplary embodiment of the method each of the load sensors inside the cam followers 15 independently of the other load sensor measures a load acting on a clevis assembly or load transmission unit 17 releasably held by the tow plate 1. The measured values are pre-processed by the local data processing units 28 and further transmitted to the central data processing unit 30 where they are compared to a predetermined value. If the load measured in both independent measurements exceeds the predetermined value, the central data processing unit 30 instructs the actuating assembly 3 to move the locking element 9 from the retaining to the releasing position such that the load transmission unit 17 can be detached from the tow plate 1.

Furthermore, the central data processing unit 30 instructs the extractable unit retaining assembly 37 to move the holding means 39 to the releasing position after moving the locking element 9 to the releasing position, such that the extractable unit 35 can be detached from the retaining assembly 37 and extracted out of the cargo bay of the aircraft. The exemplary embodiment of the method for releasing a load transmission unit 17 shares the advantages of the respective embodiments of the tow plate 1 and the load extraction system 29 according to the present invention.

## Claims

1. Tow plate (1) for releasably holding a load transmission unit (17) connecting an extracting unit (33) to an extractable unit (35) during aerial delivery comprising a base plate (7), an actuating assembly (3) and a retaining assembly (5),
wherein the actuating assembly (3) and the retaining assembly (5) are rigidly attached to the base plate (7),
wherein the actuating assembly (3) comprises at least one locking element (9) and at least one actuator for moving the at least one locking element (9) between a retaining position and a releasing position,
wherein the actuating assembly (3) and the retaining assembly (5) are arranged for releasably holding a load transmission unit (17) attached to the tow plate (1), when the at least one locking element (9) is in the retaining position,
wherein a load transmission unit (17) held by the actuating assembly (3) and the retaining assembly (5) can be detached from the tow plate (1), when the at least one locking element (9) has been moved to the releasing position by the at least one actuator,
**characterized in**
**that** the retaining assembly (5) comprises at least one load sensor adapted for measuring a load acting on a load transmission unit (17) by an extraction unit (33) while the load transmission unit (17) is releasably held by the actuating assembly (3) and the retaining assembly (5) and
**that** the tow plate (1) comprises a central data processing unit connected (30) to the at least one load sensor and the at least one actuator, wherein the central data processing unit (30) is adapted to only instruct the at least one actuator to move the at least one locking element (9) from the retaining position to the releasing position when the load measured by the at least one load sensor exceeds a predetermined value.

2. Tow plate (1) according to claim 1, **characterized in that** the retaining assembly (5) comprises two load sensors adapted for measuring a load acting on a load transmission unit (17) by an extraction unit (33) through an extraction line (23) connected to the load transmission unit (17) while the load transmission unit (17) is releasably held by the actuating assembly (3) and the retaining assembly (5) and
that the central data processing unit (30) is connected to both load sensors wherein the central data processing unit (30) is adapted to instruct the at least one actuator to move the at least one locking element (9) from the retaining position to the releasing position only when the load measured by each of the two load sensors exceeds a predetermined value.

3. Tow plate (1) according to claim 1 or 2, **characterized in that** the actuating assembly (3) comprises two actuators for moving the at least one locking element (9) between the retaining position and the releasing position, wherein both actuators are connected to the central data processing unit (30) and the central data processing unit (30) is adapted to instruct both actuators to move the locking element (9) from the retaining to the locking position.

4. Tow plate (1) according to any of the preceding claims, **characterized in that** each load sensor is connected to the central data processing unit (30) via a separate local data processing unit (28),
wherein each local data processing unit (28) is adapted to determine a load acting on a load transmission unit (17) by an extraction unit (33) from a signal of the respective load sensor connected to the local data processing unit (28) and to transmit the determined load to the central data processing unit (30).

5. Load extraction system (29) for retaining an extractable unit (35) in a cargo bay of an aerospace vehicle and releasing the extractable unit (35) from the cargo bay comprising a tow plate (1) according to any of the preceding claims and an extractable unit retaining assembly (37),
wherein the extractable unit retaining assembly (37) comprises holding means (39) for releasably retaining an extractable unit (35), wherein the holding means (39) can be moved between a holding position in which an extractable unit (35) can be held by the holding means (39) attached to the extractable unit retaining assembly (37) and a releasing position in which an extractable unit (35) can be detached from the extractable unit retaining assembly (37), and
wherein the central data processing unit (30) is adapted to instruct the extractable unit retaining assembly (37) to move the holding means (39) from the holding position to the releasing position after moving the at least one locking element (9) from the retaining position to the releasing position.

6. Load extraction system (29) according to claim 5, wherein the load extraction system (29) further comprises a load transmission unit (17), an extractable unit (35) and an extraction unit (33),
wherein the extractable unit (35) is adapted to be held by the extractable unit retaining assembly (37) and connected to the load transmission unit (17) by a device line (25) and the extraction unit (33) is connected to the load transmission unit (17) by an extraction line (23) and
wherein the load transmission unit (17) is adapted to be releasably held by the actuating assembly (3) and the retaining assembly (5) of the tow plate (1).

7. Load extraction system (29) according to claim 5 or 6, wherein the extraction unit (33) is a drogue parachute, an extraction parachute (33) or a cargo unit.

8. Load extraction system (29) according to any of claims 5 to 7, wherein the extractable unit (35) is an extraction parachute (33) or a cargo unit (35).

9. Method for releasing a load transmission unit (17) connecting an extracting unit (33) to an extractable unit (35) during aerial delivery and held between at least one locking element (9) of an actuating assembly (3) in a retaining position and a retaining assembly (5), the actuating assembly (3) and the retaining assembly (5) forming part of a tow plate (1), the method comprising the steps of
measuring a load acting on the load transmission unit (17) by an extraction unit (33),
comparing the measured load with a predetermined value and
moving the at least one locking element (9) from the retaining position to a releasing position when the predetermined value is exceeded, wherein the load transmission unit (17) can be detached from the tow plate (1) when the locking element (9) is in the releasing position.

10. Method according to claim 9, wherein measuring the load acting on the load transmission unit (17) comprises performing two independent measurements of the load acting on the load transmission unit (17) with two separate load sensors,
wherein comparing the measured load with a predetermined value comprises comparing the measured loads of both independent measurements to the predetermined value and
wherein the at least one locking element (9) is only moved to the releasing position when both measured loads exceed the predetermined value.

11. Method according to claim 9 or 10, further including a step of moving a holding means (39) of an extractable unit retaining assembly (37) to a releasing position after moving the at least one locking element (9) to a releasing position, such that an extractable unit (35) held by the holding means (39) in a holding position can be detached from the extractable unit retaining assembly (37).

## Patentansprüche

1. Zugplatte (1) zum lösbaren Halten einer Lastübertragungseinheit (17), die eine Extraktionseinheit (33) während Lieferung über die Luft mit einer extrahierbaren Einheit (35) verbindet, umfassend eine Grundplatte (7), eine Auslöseanordnung (3) und eine Halteanordnung (5),
wobei die Auslöseanordnung (3) und die Halteanordnung (5) starr an der Grundplatte (7) angebracht sind,
wobei die Auslöseanordnung (3) mindestens ein Sperrelement (9) und mindestens einen Aktuator zum Bewegen des mindestens einen Sperrelements (9) zwischen einer Halteposition und einer Freigabeposition umfasst,
wobei die Auslöseanordnung (3) und die Halteanordnung (5) zum lösbaren Halten einer Lastübertragungseinheit (17) angeordnet sind, die an der Zugplatte (1) angebracht ist, wenn das mindestens eine Sperrelement (9) in der Halteposition ist,
wobei eine Lastübertragungseinheit (17), die von der Auslöseanordnung (3) und der Halteanordnung (5) gehalten wird, von der Zugplatte (1) gelöst werden kann, wenn das mindestens eine Sperrelement (9) von dem mindestens einen Aktuator in die Freigabeposition bewegt wurde,
**dadurch gekennzeichnet,**
**dass** die Halteanordnung (5) mindestens einen Lastsensor umfasst, der zum Messen einer auf eine Lastübertragungseinheit (17) durch eine Extraktionseinheit (33) wirkenden Last ausgelegt ist, während die Lastübertragungseinheit (17) von der Auslöseanordnung (3) und der Halteanordnung (5) lösbar gehalten wird, und
**dass** die Zugplatte (1) eine zentrale Datenverarbeitungseinheit (30) umfasst, die mit dem mindestens einen Lastsensor und dem mindestens einen Aktuator verbunden ist, wobei die zentrale Datenverarbeitungseinheit (30) dazu ausgelegt ist, nur den mindestens einen Aktuator anzuweisen, das mindestens eine Sperrelement (9) von der Halteposition in die Freigabeposition zu bewegen, wenn die von dem mindestens einen Lastsensor gemessene Last einen vorbestimmten Wert überschreitet.

2. Zugplatte (1) nach Anspruch 1, **dadurch gekennzeichnet, dass** die Halteanordnung (5) zwei Lastsensoren umfasst, die ausgelegt sind zum Messen einer Last, die auf eine Lastübertragungseinheit (17) durch eine Extraktionseinheit (33) über eine mit der Lastübertragungseinheit (17) verbundene Extraktionsleitung (23) wirkt, während die Lastübertragungseinheit (17) von der Auslöseanordnung (3) und der Halteanordnung (5) lösbar gehalten wird, und
dass die zentrale Datenverarbeitungseinheit (30) mit beiden Lastsensoren verbunden ist, wobei die zentrale Datenverarbeitungseinheit (30) dazu ausgelegt ist, den mindestens einen Aktuator anzuweisen, das mindestens eine Sperrelement (9) nur dann von der Halteposition in die Freigabeposition zu bewegen, wenn die von jedem der zwei Lastsensoren gemessene Last einen vorbestimmten Wert überschreitet.

3. Zugplatte (1) nach Anspruch 1 oder 2, **dadurch gekennzeichnet, dass** die Auslöseanordnung (3) zwei Aktuatoren zum Bewegen des mindestens einen Sperrelements (9) zwischen der Halteposition und der Freigabeposition umfasst, wobei beide Aktuatoren mit der zentralen Datenverarbeitungseinheit (30) verbunden sind und die zentrale Datenverarbeitungseinheit (30) dazu ausgelegt ist, beide Aktuatoren anzuweisen, das Sperrelement (9) von der Halte- in die Sperrposition zu bewegen.

4. Zugplatte (1) nach einem der vorangehenden Ansprüche, **dadurch gekennzeichnet, dass** jeder Lastsensor über eine separate lokale Datenverarbeitungseinheit (28) mit der zentralen Datenverarbeitungseinheit (30) verbunden ist,
wobei jede lokale Datenverarbeitungseinheit (28) dazu ausgelegt ist, von einem Signal des entsprechenden Lastsensors, der mit der lokalen Datenverarbeitungseinheit (28) verbunden ist, eine Last festzustellen, die von einer Extraktionseinheit (33) auf eine Lastübertragungseinheit (17) wirkt, und die festgestellte Last an die zentrale Datenverarbeitungseinheit (30) zu übertragen.

5. Lastextraktionssystem (29) zum Halten einer extrahierbaren Einheit (35) in einem Frachtraum eines Luftfahrzeugs und Freigeben der extrahierbaren Einheit (35) aus dem Frachtraum, umfassend eine Zugplatte (1) nach einem der vorangehenden Ansprüche und eine Halteanordnung (37) der extrahierbaren Einheit,
wobei die Halteanordnung (37) der extrahierbaren Einheit ein Haltemittel (39) zum lösbaren Halten einer extrahierbaren Einheit (35) umfasst, wobei das Haltemittel (39) zwischen einer Halteposition, in der eine extrahierbare Einheit (35) von dem an der Halteanordnung (37) der extrahierbaren Einheit angebrachten Haltemittel (39) gehalten werden kann, und einer Freigabeposition, in der eine extrahierbare Einheit (35) von der Halteanordnung (37) der extrahierbaren Einheit gelöst werden kann, bewegt werden kann, und
wobei die zentrale Datenverarbeitungseinheit (30) dazu ausgelegt ist, die Halteanordnung (37) der extrahierbaren Einheit anzuweisen, das Haltemittel (39) von der Halteposition in die Freigabeposition zu bewegen, nachdem sie das mindestens eine Sperrelement (9) von der Halteposition in die Freigabeposition bewegt hat.

6. Lastextraktionssystem (29) nach Anspruch 5, wobei das Lastextraktionssystem (29) ferner eine Lastübertragungseinheit (17), eine extrahierbare Einheit (35) und eine Extraktionseinheit (33) umfasst,
wobei die extrahierbare Einheit (35) dazu ausgelegt ist, von der Halteanordnung (37) der extrahierbaren Einheit gehalten zu werden und mit der Lastübertragungseinheit (17) durch eine Vorrichtungsleitung (25) verbunden zu sein, und die Extraktionseinheit (33) mit der Lastübertragungseinheit (17) durch eine Extraktionsleitung (23) verbunden ist, und
wobei die Lastübertragungseinheit (17) angeordnet ist, um von der Aktuatoranordnung (3) und der Halteanordnung (5) der Zugplatte (1) lösbar gehalten zu werden.

7. Lastextraktionssystem (29) nach Anspruch 5 oder 6, wobei die Extraktionseinheit (33) ein Bremsfallschirm, ein Ausziehfallschirm (33) oder eine Frachteinheit ist.

8. Lastextraktionssystem (29) nach einem der Ansprüche 5 bis 7, wobei die extrahierbare Einheit (35) ein Ausziehfallschirm (33) oder eine Frachteinheit (35) ist.

9. Verfahren zum Freigeben einer Lastübertragungseinheit (17), die eine extrahierende Einheit (33) während Lieferung über die Luft mit einer extrahierbaren Einheit (35) verbindet und zwischen mindestens einem Sperrelement (9) einer Auslöseanordnung (3) in einer Halteposition und einer Halteanordnung (5) gehalten wird, wobei die Auslöseanordnung (3) und die Halteanordnung (5) einen Teil einer Zugplatte (1) bilden, wobei das Verfahren folgende Schritte umfasst:
Messen einer auf die Lastübertragungseinheit (17) durch eine Extraktionseinheit (33) wirkenden Last,
Vergleichen der gemessenen Last mit einem vorbestimmten Wert, und
Bewegen des mindestens einen Sperrelements (9) von der Halteposition in eine Freigabeposition, wenn der vorbestimmte Wert überschritten wird, wobei die Lastübertragungseinheit (17) von der Zugplatte (1) gelöst werden kann, wenn das Sperrelement (9) in der Freigabeposition ist.

10. Verfahren nach Anspruch 9, wobei das Messen der auf die Lastübertragungseinheit (17) wirkenden Last ein Ausführen zweier unabhängiger Messungen der auf die Lastübertragungseinheit (17) wirkenden Last mit zwei separaten Lastsensoren umfasst,
wobei das Vergleichen der gemessenen Last mit einem vorbestimmten Wert ein Vergleichen der gemessenen Lasten beider unabhängiger Messungen mit dem vorbestimmten Wert umfasst, und
wobei das mindestens eine Sperrelement (9) nur dann in die Freigabeposition bewegt wird, wenn beide gemessenen Lasten den vorbestimmten Wert überschreiten.

11. Verfahren nach Anspruch 9 oder 10, ferner beinhaltend einen Schritt des Bewegen eines Haltemittels (39) einer Halteanordnung (37) einer extrahierbaren Einheit in eine Freigabeposition, nachdem das mindestens eine Sperrelement (9) in eine Freigabeposition bewegt wurde, sodass eine extrahierbare Einheit (35), die von dem Haltemittel (39) in einer Halteposition gehalten wurde, von der Halteanordnung (37) der extrahierbaren Einheit gelöst werden kann.

## Revendications

1. Dispositif (1) de transfert de forces pour maintenir de manière libérable une unité (17) de transmission de charge raccordant une unité d'extraction (33) à une unité (35) pouvant être extraite pendant un déploiement aérien comprenant une plaque de base (7), un ensemble d'actionnement (3) et un ensemble de retenue (5),
dans lequel l'ensemble d'actionnement (3) et l'ensemble de retenue (5) sont solidarisés à la plaque de base (7),
dans lequel l'ensemble d'actionnement (3) comprend au moins un élément de verrouillage (9) et au moins un actionneur pour déplacer ledit élément de verrouillage (9) entre une position de retenue et une position de déblocage,
dans lequel l'ensemble d'actionnement (3) et l'ensemble de retenue (5) sont agencés pour maintenir amovible une unité (17) de transmission de charge fixée au dispositif (1) de transfert de forces, quand ledit élément de verrouillage (9) est dans la position de retenue,
dans lequel l'unité (17) de transmission de charge maintenue par l'ensemble d'actionnement (3) et l'ensemble de retenue (5) peut être détachée du dispositif (1) de transfert de forces, quand ledit élément de verrouillage (9) a été déplacé vers la position de déblocage par ledit actionneur,
**caractérisé en ce que**
l'ensemble de retenue (5) comprend au moins un détecteur de charge apte à mesurer une charge agissant sur l'unité (17) de transmission de charge par une unité d'extraction (33) alors que l'unité (17) de transmission de charge est maintenue amovible par l'ensemble d'actionnement (3) et l'ensemble de retenue (5) et
que le dispositif (1) de transfert de forces comprend une unité centrale (30) de traitement de données raccordée audit détecteur de charge et audit actionneur,
dans lequel l'unité centrale (30) de traitement de données est apte à commander audit actionneur de déplacer ledit élément de verrouillage (9) de la position de retenue à la position de déblocage quand la charge mesurée par ledit détecteur de charge dépasse une valeur prédéterminée.

2. Dispositif (1) de transfert de forces selon la revendication 1, **caractérisé en ce que** l'ensemble de retenue (5) comprend deux détecteurs de charge aptes à mesurer une charge agissant sur une unité (17) de transmission de charge par une unité d'extraction (33) grâce à une corde d'extraction (23) raccordée à l'unité (17) de transmission de charge alors que l'unité (17) de transmission de charge est maintenue amovible par l'ensemble d'actionnement (3) et l'ensemble de retenue (5) et que l'unité centrale (30) de traitement de données est raccordée aux deux détecteurs de charge,
dans lequel l'unité centrale (30) de traitement de données est apte à commander audit actionneur de déplacer ledit élément de verrouillage (9) de la position de retenue à la position de déblocage seulement quand la charge mesurée par chacun des deux détecteurs de charge dépasse une valeur prédéterminée.

3. Dispositif (1) de transfert de forces selon la revendication 1 ou 2, **caractérisé en ce que** l'ensemble d'actionnement (3) comprend deux actionneurs pour déplacer ledit élément de verrouillage (9) entre la position de retenue et la position de déblocage,
dans lequel les deux actionneurs sont raccordés à l'unité centrale (30) de traitement de données et l'unité centrale (30) de traitement de données est apte à commander aux deux actionneurs de déplacer l'élément de verrouillage (9) de la position de retenue à la position de blocage.

4. Dispositif (1) de transfert de forces selon l'une quelconque des revendications précédentes, **caractérisé en ce que** chaque détecteur de charge est raccordé à l'unité centrale (30) de traitement de données par le biais d'une unité locale (28) séparée de traitement de données,
dans lequel chaque unité locale (28) de traitement de données est apte à déterminer la charge agissant sur une unité (17) de transmission de charge par une unité d'extraction (33) à partir d'un signal du détecteur de charge correspondant raccordé à l'unité locale (28) de traitement de données et à transmettre la charge déterminée à l'unité centrale (30) de traitement de données.

5. Système (29) d'extraction de charge pour retenir dans la soute d'un véhicule aérospatial une unité (35) pouvant en être extraite et débloquer l'unité (35) pouvant être extraite de la soute, comprenant un dispositif (1) de transfert de forces selon l'une quelconque des revendications précédentes et un ensemble (37) de retenue d'unité pouvant être extraite,
dans lequel l'ensemble (37) de retenue d'unité pouvant être extraite comprend un moyen (39) de maintien pour retenir amovible une unité (35) pouvant être extraite, dans lequel le moyen (39) de maintien peut se déplacer entre une position de maintien dans laquelle l'unité (35) pouvant être extraite peut être maintenue par le moyen (39) de maintien fixé à l'ensemble (37) de retenue d'unité pouvant être extraite et une position de déblocage dans laquelle l'unité (35) pouvant être extraite peut être détachée de l'ensemble (37) de retenue d'unité pouvant être extraite, et
dans lequel l'unité centrale (30) de traitement de données est apte à commander à l'ensemble (37) de retenue d'unité pouvant être extraite de déplacer le moyen (39) de maintien de la position de maintien à la position de déblocage après avoir déplacé ledit élément de verrouillage (9) de la position de retenue à la position de déblocage.

6. Système (29) d'extraction de charge selon la revendication 5, dans lequel le système (29) d'extraction de charge comprend en outre une unité (17) de transmission de charge, une unité (35) pouvant être extraite et une unité d'extraction (33),
dans lequel l'unité (35) pouvant être extraite est apte à être maintenue par l'ensemble (37) de retenue d'unité pouvant être extraite et raccordée à l'unité (17) de transmission de charge par une corde (25) de dispositif et l'unité d'extraction (33) est raccordée à l'unité (17) de transmission de charge par une corde d'extraction (23) et
dans lequel l'unité (17) de transmission de charge est apte à être maintenue amovible par l'ensemble d'actionnement (3) et l'ensemble de retenue (5) du dispositif (1) de transfert de forces.

7. Système (29) d'extraction de charge selon la revendication 5 ou 6, dans lequel l'unité d'extraction (33) est un parachute-frein, un parachute d'extraction (33) ou une unité de cargaison.

8. Système (29) d'extraction de charge selon l'une quelconque des revendications 5 à 7, dans lequel l'unité (35) pouvant être extraite est un parachute d'extraction (33) ou une unité (35) de cargaison.

9. Procédé de déblocage d'une unité (17) de transmission de charge raccordant une unité d'extraction (33) à une unité (35) pouvant être extraite pendant un déploiement aérien et maintenue entre au moins un élément de verrouillage (9) d'un ensemble d'actionnement (3) dans une position de retenue et un ensemble de retenue (5), l'ensemble d'actionnement (3) et l'ensemble de retenue (5) formant partie d'une plaque de base (1), le procédé comprenant les étapes consistant à :
mesurer une charge agissant sur l'unité (17) de transmission de charge par une unité d'extraction (33),
comparer la charge mesurée avec une valeur prédéterminée et
déplacer ledit élément de verrouillage (9) de la position de retenue à une position de déblocage quand la valeur prédéterminée est dépassée,
dans lequel l'unité (17) de transmission de charge peut être détachée du dispositif (1) de transfert de force quand l'élément de verrouillage (9) est dans la position de déblocage.

10. Procédé selon la revendication 9, dans lequel la mesure de la charge agissant sur l'unité (17) de transmission de charge comprend les opérations consistant à effectuer deux mesures indépendantes de la charge agissant sur l'unité (17) de transmission de charge avec deux détecteurs de charge séparés,
dans lequel la comparaison de la charge mesurée avec une valeur prédéterminée comprend l'opération consistant à comparer les charges mesurées des deux mesures indépendantes à la valeur prédéterminée et
dans lequel ledit élément de verrouillage (9) n'est déplacé dans la position de retenue que quand les deux charges mesurées dépassent la valeur prédéterminée.

11. Procédé selon la revendication 9 ou 10, comprenant en outre une étape consistant à déplacer un moyen (39) de maintien d'un ensemble (37) de retenue d'unité pouvant être extraite vers une position de déblocage après avoir déplacé ledit élément (9) de verrouillage vers une position de déblocage, de telle sorte qu'une unité (35) pouvant être extraite maintenue par le moyen (39) de maintien dans une position de maintien puisse être détachée de l'ensemble (37) de retenue d'unité pouvant être extraite.
